# EUROPÄISCHE PATENTSCHRIFT

(11) **EP 0 592 879 B1**
(45) Veröffentlichungstag und Bekanntmachung des Hinweises auf die Patenterteilung: **03.07.1996**
(21) Anmeldenummer: 93115797.8
(22) Anmeldetag: 30.09.1993
(51) Int. Cl.: B60R 21/28

(54) **Gassack-Baugruppe für ein Rückhaltesystem in Fahrzeugen**
Airbag sub-assembly for a vehicle restraint system
Module de sac gonflable pour un système de retenue de véhicule

(30) Priorität: 13.10.1992 DE 4234510
(43) Veröffentlichungstag der Anmeldung: 20.04.1994
(73) Patentinhaber: TRW Occupant Restraint Systems GmbH, D-73553 Alfdorf (DE)
(72) Erfinder: Stütz, Michael, D-73565 Spraitbach (DE); Mödinger, Thomas, D-73553 Alfdorf-Vordersteinenberg (DE); Wisslicen, Gitta, D-73527 Schwäbisch Gmünd (DE)
(74) Vertreter: Degwert, Hartmut, Dipl.-Phys.

(56) Entgegenhaltungen:
- EP-A- 0 536 677
- DE-A- 3 147 780
- PATENT ABSTRACTS OF JAPAN vol. 13, no. 555 (M-904)11. Dezember 1989 & JP-A-01 229 739 (HONDA MOTOR CO LTD) 13. September 1989

## Beschreibung

Die Erfindung betrifft eine Gassack-Baugruppe für ein Rückhaltesystem in Fahrzeugen, mit einem Gehäuse und wenigstens einem in diesem angeordneten pyrotechnischen Gasgenerator, wobei in der Wandung des Gehäuses wenigstens eine Entlastungsöffnung angeordnet ist, die durch ein Ventilelement verschließbar ist, wobei dieses Ventilelement durch ein auf eine Temperaturänderung ansprechendes Steuerelement bewegbar ist, welches die Entlastungsöffnung oder die Entlastungsöffnungen bei niedrigeren Umgebungstemperaturen verschließt und bei höheren Umgebungstemperaturen freigibt.

Eine solche Gassack-Baugruppe ist aus der JP-A-01 229 739 bekannt. Die Aufgabe der Entlastungsöffnung besteht darin, oberhalb einer gewissen Umgebungstemperatur ein Entweichen eines Teils des vom Gasgenerator erzeugten Gases aus der Gassack-Baugruppe heraus zu ermöglichen. Der Hintergrund einer solchen Konstruktion ist darin zu sehen, daß Rückhaltesysteme in Fahrzeugen innerhalb eines weiten Temperaturbereichs von etwa -35°C bis +85°C funktionsfähig sein müssen. Aufgrund der Eigenschaften der verwendeten gaserzeugenden Stoffe schwankt innerhalb dieses Temperturbereiches die durch die Gassack-Baugruppe erzeugte Gasmenge um bis zu ± 25% gegenüber der bei Raumtemperatur erzeugten Gasmenge. Bei Temperaturen von 85°C und darüber hinaus wäre folglich die mechanische Belastung der durch den Gasgenerator aktivierten Teile des Rückhaltesystems, beispielsweise eines aufblasbaren Gassacks, übermäßig groß, wenn nicht ein Teil des erzeugten Gases entweichen könnte. Die aus dem oben genannten Dokument bekannt Gassack-Baugruppe ist mit einem Kolben versehen, der von einer temperaturabhängigen Feder beaufschlagt ist. In Abhängigkeit von der Umgebungstemperatur wird dieser Kolben derart verstellt, daß ein Durchgang vom Inneren der Gassack-Baugruppe zu Entlastungsöffnungen freigegeben wird. Allerdings ist die dort offenbarte Konstruktion sowohl hinsichtlich des Raumbedarfs als auch hinsichtlich des Gewichts unbefriedigend.

Durch die Erfindung wird eine Gassack-Baugruppe der eingangs genannten Art geschaffen, die dadurch gekennzeichnet ist, daß die Entlastungsöffnung unterhalb von etwa 20°C verschlossen ist, zwischen etwa 20°C und etwa 85°C progressiv geöffnet wird und oberhalb von etwa 85°C vollständig geöffnet ist und daß das Ventilelement durch eine drehbare Scheibe gebildet ist, die eine in Deckung mit der Entlastungsöffnung in der Wandung des Gehäuses bewegbare Durchtrittsöffnung aufweist. Ein solches Ventilelement stellt einen Schieber mit minimalem Raumbedarf dar, der in einer Ebene senkrecht zur Gasdurchtrittsrichtung bewegt wird. Ferner ist die Antriebsleistung eines solchen Schiebers sehr gering.

Gemäß einer bevorzugten Ausführungsform ist vorgesehen, daß das Steuerelement eine Bimetallfeder aufweist. Eine solche Feder ist besonders geeignet, das Ventilelement zu bewegen.

Weitere vorteilhafte Ausgestaltungen der Erfindung sind in den Unteransprüchen gegeben.

Weitere Merkmale und Vorteile der Erfindung ergeben sich aus der folgenden Beschreibung und aus der Zeichnung, auf die bezug genommen wird. In der Zeichnung zeigen:
Fig. 1 eine Perspektivansicht einer Gassack-Baugruppe;
Fig. 2 einen Schnitt durch ein thermisch gesteuertes Entlastungsventil in der Wandung des Gehäuses der Gassack-Baugruppe; und
Figuren 3a, 3b und 3c schematische Darstellungen des Entlastungsventils in Draufsicht und in drei verschiedenen Stellungen.

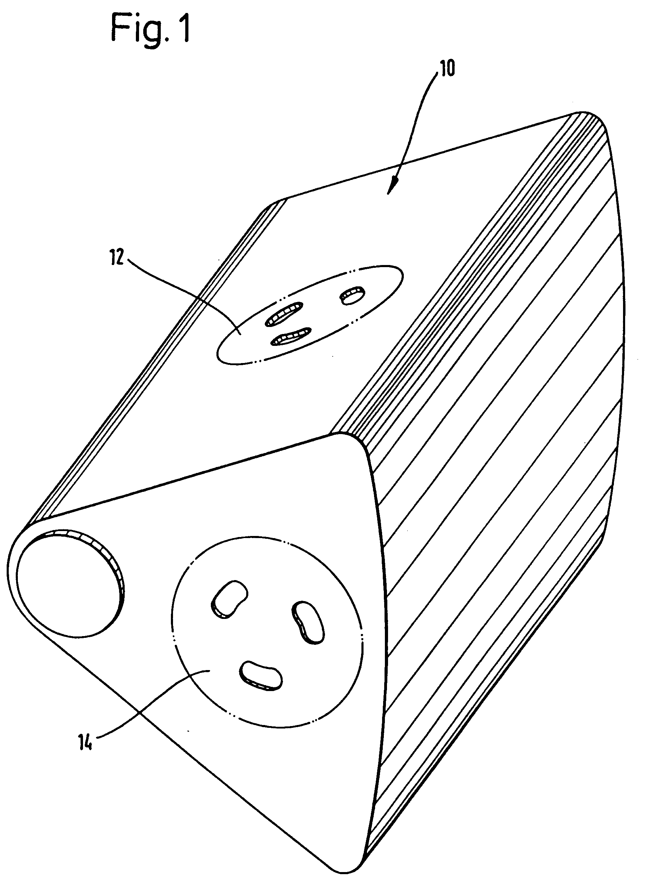

In der Wandung des Gehäuses 10 der in Fig. 1 gezeigten Gassack-Baugruppe sind zwei thermisch gesteuerte Entlastungsventile 12, 14 angeordnet. Die Anzahl dieser Entlastungsventile und ihre Anordnung können nach den jeweiligen Erfordernissen frei gewählt werden.

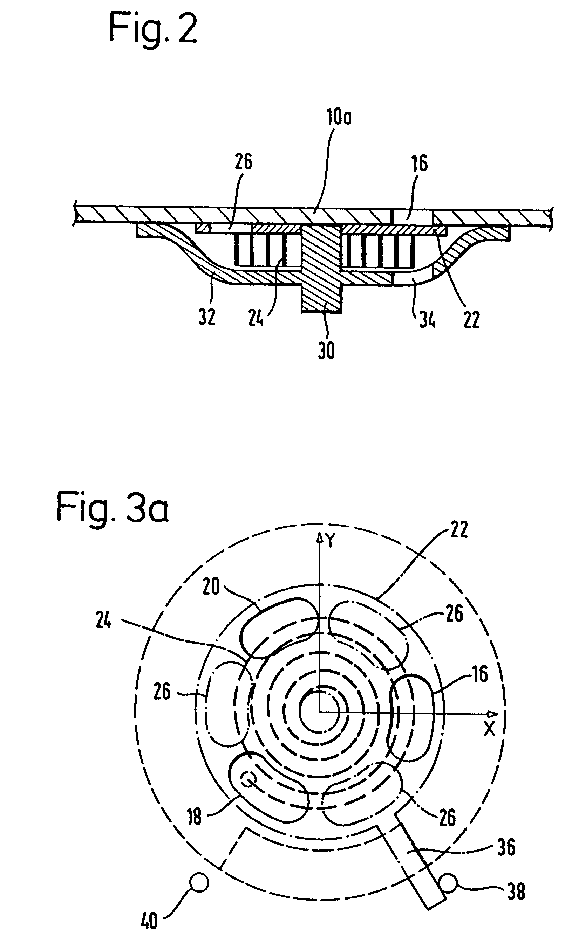

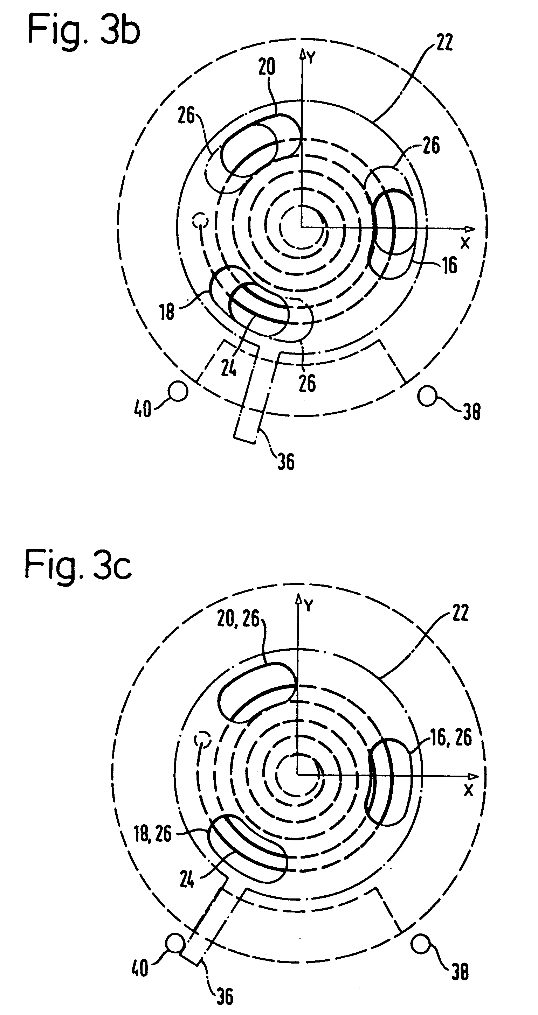

Das in Fig. 2 im Schnitt und in den Figuren 3a, 3b und 3c in Draufsicht gezeigte, thermisch gesteuerte Entlastungsventil besteht aus drei in der Wandung 10a des Gehäuses 10 angeordneten Entlastungsöffnungen 16, 18 und 20, die auf einem Kreis in gleichen Winkelabständen angeordnet sind, einer drehbaren Scheibe 22 und einer spiralförmigen Bimetallfeder 24. Die Scheibe 22 ist mit drei Durchtrittsöffnungen 26 versehen, die von gleicher Form und Anordnung wie die Entlastungsöffnungen 16, 18 und 20 sind sowie mit diesen durch Drehung der Scheibe 22 in Deckung gebracht werden können. Die Scheibe 22 ist drehbar auf einem Zapfen 30 gelagert, der von einem glockenförmigen Deckelteil 32 getragen wird, welches an der Innenseite der Wandung 10a befestigt ist und Durchtrittsöffnungen 34 aufweist. Das innere Ende der spiralförmigen Bimetallfeder 24 ist an dem Zapfen 30 und ihr äußeres Ende an der Scheibe 22 angeschlossen. Die Scheibe 22 ist mit einem radial abstehenden Arm 36 versehen, der mit zwei Anschlägen 38, 40 zusammenwirkt, die an der Innenseite der Wandung 10a angebracht sind. Die Anschläge 38, 40 bewirken eine Begrenzung des Drehwinkels der Scheibe 22.

Bei dem in den Figuren 2 und 3a gezeigten Zustand sind die Entlastungsöffnungen 16, 18, 20 durch die Scheibe 22 verschlossen. Dieser Zustand tritt bei Umgebungstemperaturen von etwa 20 °C und darunter ein. Die Drehstellung der Scheibe 22 wird durch den Anschlag 38 bestimmt.

Bei höheren Temperaturen als etwa 20 °C tritt eine Verformung der spiralförmigen Bimetallfeder 24 ein, wodurch ihr äußeres, an die Scheibe 22 angeschlossenes Ende im Uhrzeigersinn verdreht wird. Folglich wird die Scheibe 22 verdreht, wobei die Durchtrittsöffnungen 26 der Scheibe 22 mit den Entlastungsöffnungen 16, 18, 20 teilweise zur Deckung kommen. In diesem Zustand kann Gas, welches durch einen oder mehrere im Inneren des Gehäuses 10 angeordnete, pyrotechnische Gasgeneratoren erzeugt wird, durch die Öffnung 34, die Durchtrittsöffnungen 26 und die Entlastungsöffnungen 16, 18, 20 nach außen entweichen.

Bei weiterer Temperaturerhöhung wird die Scheibe 22 stärker verdreht, so daß die Entlastungsöffnungen 16, 18, 20 progressiv freigegeben werden. Dieser Zustand ist in Fig. 3b dargestellt.

Bei Temperaturen von etwa 85 °C und darüber ist die Scheibe 22 so weit verdreht, daß der Arm 36 am Anschlag 40 anliegt. In diesem Zustand sind die Durchtrittsöffnungen 26 mit den Entlastungsöffnungen 16, 18, 20 zur Deckung gebracht, so daß diese vollständig freigegeben sind.

## Patentansprüche

1. Gassack-Baugruppe für ein Rückhaltesystem in Fahrzeugen, mit einem Gehäuse (10) und wenigstens einem in diesem angeordneten pyrotechnischen Gasgenerator, wobei in der Wandung (10a) des Gehäuses wenigstens eine Entlastungsöffnung (16, 18, 20) angeordnet ist, die durch ein Ventilelement (22) verschließbar ist, wobei dieses Ventilelement (22) durch ein auf eine Temperaturänderung ansprechendes Steuerelement (24) bewegbar ist, welches die Entlastungsöffnung (16, 18, 20) bei niedrigeren Umgebungstemperaturen verschließt und bei höheren Umgebungstemperaturen freigibt, dadurch gekennzeichnet, daß die Entlastungsöffnung (16, 18, 20) unterhalb von etwa 20°C verschlossen ist, zwischen etwa 20°C und etwa 85°C progressiv geöffnet wird und oberhalb von etwa 85°C vollständig geöffnet ist und daß das Ventilelement durch eine drehbare Scheibe (22) gebildet ist, die eine in Deckung mit der Entlastungsöffnung (16, 18, 20) in der Wandung des Gehäuses bewegbare Durchtrittsöffnung (26) aufweist.

2. Gassack-Baugruppe nach Anspruch 1, dadurch gekennzeichnet, daß die Scheibe (22) zwischen zwei Anschlägen (38, 40) drehbar ist.

3. Gassack-Baugruppe nach einem der vorstehenden Ansprüche, dadurch gekennzeichnet, daß das Steuerelement eine Bimetallfeder (24) aufweist.

4. Gassack-Baugruppe nach Anspruch 3, dadurch gekennzeichnet, daß die Bimetallfeder (24) spiralförmig ausgebildet und mit einem Ende an dem Gehäuse sowie mit dem anderen Ende an dem Ventilelement (22) angeschlossen ist.

5. Gassack-Baugruppe nach einem der vorhergehenden Ansprüche, dadurch gekennzeichnet, daß die Entlastungsöffnung (16, 18, 20) entlang einer Kreislinie mit einem Radius, der dem mittleren Abstand der Entlastungsöffnung vom Drehpunkt der Scheibe (22) entspricht, gestreckt ausgebildet ist.

6. Gassack-Baugruppe nach Anspruch 5, dadurch gekennzeichnet, daß auf der Kreislinie drei gestreckte Entlastungsöffnungen (16, 18, 20) in gleichen Winkelabständen angeordnet sind.

## Claims

1. A gas bag assembly for a vehicular restraining system comprising a housing (10) and at least one pyrotechnical gas generator arranged therein, said wall (10a) of the housing having at least one relief opening (16, 18, 20) which can be closed off by a valve element (22), said valve element (22) being movable by a control element (24) responding to a temperature change and which closes said relief opening (16, 18, 20) at low temperatures and opens said relief opening at high temperatures, characterized in that said relief opening (16, 18, 20) is closed below approx. 20°C, is progressively opened between approx. 20°C and approx. 85°C and is completely opened at temperatures above approx. 85°C, and in that said valve element is formed by a rotatable disk (22) including a passage opening (26) movable to coincide with said relief opening (16, 18, 20) in the wall of said housing.

2. A gas bag assembly according to claim 1, wherein said disk (22) is rotatable between two stoppers (38, 40).

3. A gas bag assembly according to any of the above claims, wherein said control element includes a bimetallic spring (24).

4. A gas bag assembly according to claim 3, wherein said bimetallic spring (24) is spirally shaped and is connected by its one end to said housing and by its other end to said valve element (22).

5. A gas bag assembly according to any of the preceding claims, wherein said relief opening (16, 18, 20) is formed elongated along a line of a circle, the radius of which corresponds to the average spacing of the relief opening from the fulcrum of said disk (22).

6. A gas bag assembly according to claim 5, wherein on said line of a circle, three elongated relief openings (16, 18, 20) are arranged in the same angular spacing.

## Revendications

1. Module à coussin gonflable pour système de retenue de véhicules, comprenant un boîtier (10) et au moins un générateur pyrotechnique de gaz disposé dans ce dernier, au moins un orifice de décharge (16, 18, 20) disposé dans la cloison (10a) du boîtier étant obturable par un élément formant soupape (22), cet élément formant soupape (22) étant déplaçable par un élément de commande (24) qui répond à une variation de température et obturant l'orifice de décharge (16, 18, 20) aux basses températures ambiantes et les libèrant aux températures ambiantes élevées, caractérisé en ce que l'orifice de décharge (16, 18, 20) est obturé au-dessous d'environ 20°C, est ouvert progressivement entre environ 20°C et environ 85°C et totalement ouvert au-dessus d'environ 85°C et en ce que l'élément formant soupape est constitué d'un disque rotatif (22) qui comporte un trou de passage (26) qui est déplaçable pour être mis en superposition avec l'orifice de décharge (16, 18, 20) de la cloison du boîtier.

2. Module à coussin gonflable selon la revendication 1, caractérisé en ce que le disque (22) est rotatif entre deux butées (38, 40).

3. Module à coussin gonflable selon l'une des revendications précédentes, caractérisé en ce que l'élément de commande est un ressort à bilame (24).

4. Module à coussin gonflable selon la revendication 3, caractérisé en ce que le ressort à bilame (24) est en spirale et raccordé par une extrémité au boîtier et par l'autre extrémité à l'élément formant soupape (22).

5. Module à coussin gonflable selon l'une des revendications précédentes, caractérisé en ce que l'orifice de décharge (16, 18, 20) est allongé le long d'une ligne circulaire ayant un rayon qui correspond à la distance moyenne de l'orifice de décharge au centre de rotation du disque (22).

6. Module à coussin gonflable selon la revendication 5, caractérisé en ce que trois orifices allongés de décharge (16, 18, 20) sont disposés à des mêmes distances angulaires sur la ligne circulaire.
